# EUROPÄISCHE PATENTSCHRIFT

(11) **EP 3 234 381 B1**
(45) Veröffentlichungstag und Bekanntmachung des Hinweises auf die Patenterteilung: **21.10.2020**
(21) Anmeldenummer: 15808351.9
(22) Anmeldetag: 09.12.2015
(51) Int. Cl.: F16B 19/14

(54) **VERBINDUNGSELEMENT UND VERFAHREN ZUM HERSTELLEN EINES VERBINDUNGSELEMENTS**
CONNECTING ELEMENT AND METHOD FOR PRODUCING A CONNECTING ELEMENT
ÉLÉMENT DE LIAISON ET PROCÉDÉ DE FABRICATION D'UN ÉLÉMENT DE LIAISON

(30) Priorität: 20.12.2014 DE 102014019322
(43) Veröffentlichungstag der Anmeldung: 25.10.2017
(73) Patentinhaber: Daimler AG, 70372 Stuttgart (DE)
(72) Erfinder: GRÖZINGER, Markus, 74321 Bietigheim (DE); GUSTKE, Oliver, 73119 Zell u. A. (DE); KOHL, Daniel, 73230 Kirchheim (DE); SPIRA, Carsten, 41748 Viersen (DE)
(74) Vertreter: JENSEN & SON
(86) Internationale Anmeldenummer: PCT/EP2015/002486
(87) Internationale Veröffentlichungsnummer: WO 2016/096107

(56) Entgegenhaltungen:
- EP-A1- 0 774 589
- EP-A1- 1 022 346
- EP-A1- 2 085 624
- EP-A2- 1 629 947
- EP-A2- 2 325 505
- DE-A1-102006 002 238
- DE-A1-102011 109 808
- DE-B3-102007 000 485
- GB-A- 735 406
- US-A1- 2003 146 260

## Beschreibung

Die Erfindung betrifft ein Verfahren zum Herstellen eines Verbindungselements gemäß dem Oberbegriff des unabhängigen Patentanspruchs.

Der DE 10 2006 002 238 A1 ist ein Verbindungselement in Form eines Setzbolzens zum Verbinden von zumindest zwei Blechen als bekannt zu entnehmen. Das dort gezeigte Verbindungselement umfasst unter anderem einen zugespitzten Bereich und einen Schaftbereich. Das gesamte Verbindungselement kann dabei beschichtet sein. Alternativ ist es auch möglich, dass das Verbindungselement zweiteilig ausgebildet ist, wobei der zugespitzte Bereich und der Schaftbereich aus unterschiedlichen Materialien aufgebaut sein können.

Des Weiteren ist aus der US 2003/0146260 A1 ein Herstellverfahren für ein Befestigungselement bekannt, bei welchem ein Element mit einem eine Spitze aufweisenden ersten Schaftabschnitt und einem zweiten Schaftabschnitt produziert wird. Der erste Schaftabschnitt weist eine erste Härte auf und der zweite Schaftabschnitt weist eine zweite Härte auf, welche geringer ist als die erste Härte.

Beim Verbinden von hochfesten Werkstoffen ist es erforderlich, dass der zugespitzte Bereich besonders hart ausgebildet ist, da sonst der zugespitzte Bereich beim Durchtreiben des Verbindungselements durch die Werkstoffe plastisch verformt wird. Eine Härtung des gesamten Verbindungselements kann dabei Abhilfe schaffen, wobei dies nur bis zu einer bestimmten Grenze möglich ist, da mit steigender Streckgrenze die Anfälligkeit für Wasserstoffversprödung steigt. Darüber hinaus bietet eine durchgängige Beschichtung des Verbindungselements üblicherweise nur einen Kompromiss aus einer relativ geringen Reibung beim Eindringen in die zu verbindenden Bleche und einer noch ausreichenden Haltekraft beziehungsweise Festigkeit der Fügeverbindung aufgrund einer noch ausreichenden Reibung im Schaftbereich. Dies ist besonders wichtig, wenn Bleche mit einer relativ geringen Steifigkeit miteinander gefügt werden sollen.

Es ist daher die Aufgabe der vorliegenden Erfindung, ein Verfahren zum Herstellen eines Verbindungselements bereitzustellen, mittels welchem Bleche mit einer hohen Streckgrenze oder Bleche mit einer geringen Steifigkeit besonders gut gefügt werden können.

Diese Aufgabe wird durch ein Verfahren zum Herstellen eines Verbindungselements mit den Merkmalen des unabhängigen Patentanspruchs gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Herstellen eines Verbindungselements, insbesondere eines Setzbolzens, zum Verbinden von zumindest zwei Bauteilen, insbesondere Blechbauteilen, werden ein zugespitzter Bereich und ein Schaftbereich des Verbindungselements mit unterschiedlichen Eigenschaften hergestellt. Das Verfahren zeichnet sich dabei dadurch aus, dass das Verbindungselement einstückig hergestellt wird. Schließlich ist es erfindungsgemäß vorgesehen, dass das gesamte Verbindungselement mit einer Haftbeschichtung versehen, anschließend ausschließlich der zugespitzte Bereich in einem ersten Tauchbad von der Haftbeschichtung befreit und danach der zugespitzte Bereich in einem zweiten Tauchbad mit einer Gleitbeschichtung versehen wird. Dadurch kann auf besonders einfache Weise der zugespitzte Bereich während der Herstellung des Verbindungselements mit einer Gleitbeschichtung und der Schaftbereich während der Herstellung des Verbindungselements mit einer Haftbeschichtung versehen werden.

Vorteilhafte Ausgestaltungen des Verbindungselements sind als vorteilhafte Ausgestaltungen des erfindungsgemäßen Verfahrens zum Herstellen des Verbindungselements anzusehen.

In vorteilhafter Ausgestaltung des erfindungsgemäßen Verfahrens ist es vorgesehen, dass der zugespitzte Bereich lasergehärtet oder induktiv gehärtet wird. Vorzugsweise wird der zugespitzte Bereich nach dem Laserhärten oder induktiven Härten auch noch angelassen. Mit anderen Worten kann es vorgesehen sein, dass im Zuge der Herstellung des Verbindungselements dieses im zugespitzten Bereich angelassen wird, wodurch der zugespitzte Bereich mit einer höheren Festigkeit als der Schaftbereich hergestellt werden kann.

Das Verbindungselement, insbesondere ein Setzbolzen, zum Verbinden von zumindest zwei Bauteilen, insbesondere Blechbauteilen, umfasst einen zugespitzten Bereich und einen Schaftbereich, deren Eigenschaften sich unterscheiden. Das Verbindungselement zeichnet sich dabei dadurch aus, dass das Verbindungselement einstückig ausgebildet ist.

Insbesondere sind der zugespitzte Bereich mit einer Gleitbeschichtung und der Schaftbereich mit einer Haftbeschichtung versehen. Somit weist der zugespitzte Bereich die Gleitbeschichtung und der Schaftbereich die Haftbeschichtung auf. Dadurch weist der zugespitzte Bereich einen relativ geringen Reibwert auf und kann besonders leicht insbesondere in einen Werkstoff mit einer geringeren Steifigkeit eindringen. Aufgrund der Haftbeschichtung des Schaftbereichs weist dieser einen relativ hohen Reibwert auf und sorgt damit für eine hohe Haltekraft der hergestellten Fügeverbindung.

Im Gegensatz zu dem aus der DE 10 2006 002 238 A1 bekannten Verbindungselement, welches aus zwei Teilen unterschiedlicher Härte hergestellt ist, die anschließend miteinander verbunden worden sind, ist es bei dem Verbindungselement also vorgesehen, dass das Verbindungselement einstückig beziehungsweise einteilig ausgebildet ist. Ein aufwendiges Fügen des Verbindungselements während dessen Herstellung kann somit entfallen.

Vorzugsweise weist der zugespitzte Bereich eine höhere Festigkeit als der Schaftbereich auf. Beispielsweise kann der zugespitzte Bereich eine Festigkeit von zumindst 2.000 MPa aufweisen, wobei der Schaftbereich eine Festigkeit von weniger als 1.500 MPa aufweist. Mit anderen Worten kann das Verbindungselement lokal gezielt unterschiedliche Eigenschaften hinsichtlich seiner Werkstoffeigenschaften aufweisen. Der zugespitzte Bereich kann dadurch, dass er sehr hart ausgebildet sein kann, insbesondere ultrahochfeste Stähle, wie beispielsweise Usibor, ohne eine plastische Verformung des zugespitzten Bereichs durchdringen. Dadurch, dass der Schaftbereich jedoch eine geringere Festigkeit als der zugespitzte Bereich aufweist, ist dieser weich genug, damit dieser nicht anfällig gegenüber einer Wasserstoffversprödung ist. Alternativ wäre es aber auch denkbar, dass das Verbindungselement aus zwei verschiedenen Materialien hergestellt ist, wobei der zugespitzte Bereich und der Schaftbereich aus jeweils unterschiedlichen Materialien hergestellt sind, um die entsprechenden Werkstoffeigenschaften zu erzielen. Dabei können der Schaftbereich und ein Kopfbereich aus demselben Material hergestellt sein.

In weiterer vorteilhafter Ausgestaltung des Verbindungselements ist es vorgesehen, dass der zugespitzte Bereich eine geringere Oberflächenrauhigkeit als der Schaftbereich aufweist. Mit anderen Worten tritt beim Verbinden von zwei Blechen mittels des Verbindungselements an dem zugespitzten Bereich somit eine relativ geringe Reibung auf, wobei der Schaftbereich im Vergleich zum zugespitzten Bereich sehr rau ausgebildet ist, wodurch ebenfalls eine besonders hohe Haltekraft der mittels des Verbindungselements hergestellten Fügeverbindung erzielt werden kann.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Seitenansicht eines als Setzbolzen ausgebildeten Verbindungselements, wobei ein zugespitzter Bereich des Verbindungselements eine höhere Festigkeit als ein Schaftbereich des Verbindungselements aufweist; und in
- Fig. 2: eine weitere schematische Seitenansicht des als Setzbolzen ausgebildeten Verbindungselements, wobei eine im zugespitzten Bereich aufgebrachte Gleitbeschichtung und eine im Schaftbereich aufgebrachte Haftbeschichtung kenntlich gemacht sind.

In den Figuren werden gleiche oder funktionsgleiche Elemente mit gleichen Bezugszeichen versehen.

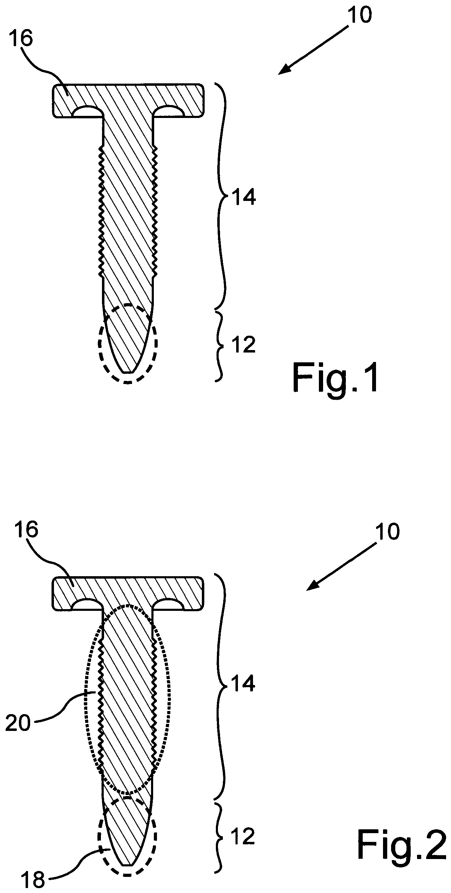

Ein Verbindungselement 10 in Form eines Setzbolzens ist in einer schematischen Seitenansicht in Fig. 1 gezeigt. Das Verbindungselement 10 umfasst einen zugespitzten Bereich 12 und einen Schaftbereich 14, wobei ein Kopfbereich 16 des Verbindungselements 10 für die nachfolgenden Ausführungen als zu dem Schaftbereich 14 zugehörend angenommen wird.

Das Verbindungselement 10 ist also nagelförmig ausgebildet und wird üblicherweise auch als sogenannter Tack bezeichnet. Das Verbindungselement 10 kann mittels eines hier nicht dargestellten Setzgerätes mit hoher Geschwindigkeit in jeweilige Bauteile, insbesondere Bleche, eingetrieben werden, sodass die beiden Bauteile, insbesondere Bleche, mittels des Verbindungselements 10 miteinander gefügt werden. Je nach Materialeigenschaften der zu fügenden Bleche werden auch unterschiedliche Anforderungen an das Verbindungselement 10 gestellt, damit die Bleche zuverlässig mit einer entsprechend hohen Haltekraft miteinander gefügt werden können.

Um beispielsweise hochfeste Bleche durchdringen zu können, ist es erforderlich, dass der zugespitzte Bereich 12 eine besonders große Härte aufweist, da der zugespitzte Bereich 12 sonst beim Durchdringen der hochfesten Bleche plastisch verformt wird. Daher ist es vorgesehen, dass der zugespitzte Bereich 12 eine höhere Festigkeit als der Schaftbereich 14 aufweist. Beispielsweise kann der zugespitzte Bereich 12 eine Festigkeit von zumindest 2.000 MPa aufweisen, wobei der Schaftbereich 14 eine Festigkeit von maximal 1.500 MPa aufweist. Dafür kann der zugespitzte Bereich 12 bei der Herstellung des Verbindungselements 10 beispielsweise lasergehärtet oder induktiv gehärtet werden, wobei der zugespitzte Bereich 12 vorzugsweise nach dem Laserhärten oder induktiven Härten noch angelassen wird.

Dadurch, dass lediglich der zugespitzte Bereich 12 gehärtet beziehungsweise angelassen wird, wird eine Anfälligkeit für eine Wasserstoffversprödung des Schaftbereichs 14 vermieden. Mit anderen Worten weist der zugespitzte Bereich 12 eine sehr große Härte auf, sodass beispielsweise auch ultrahochfeste Stähle, zum Beispiel aus Usibor, zuverlässig mit dem zugespitzten Bereich 12 ohne eine plastische Verformung des zugespitzten Bereichs 12 durchdrungen werden können. Der Schaftbereich 14 ist dabei noch weich genug, dass dieser nicht anfällig gegenüber einer Wasserstoffversprödung ist.

Alternativ wäre es auch möglich, dass für den Schaftbereich 14 und den zugespitzten Bereich 12 unterschiedliche Werkstoffe kombiniert werden, wobei der zugespitzte Bereich aus einem sehr festen Material und der Schaftbereich 14 aus einem relativ weichen Material hergestellt werden.

Insbesondere, wenn Bleche mit einer relativ geringen Steifigkeit mittels des Verbindungselements 10 gefügt werden sollen, ist es wichtig, dass der zugespitzte Bereich 12 einen relativ geringen Reibwert aufweist, sodass der zugespitzte Bereich 12 die Bleche zuverlässig durchdringen kann. Um jedoch eine ausreichende Haltekraft beziehungsweise Festigkeit der aus den Blechen hergestellten Fügeverbindung sicherstellen zu können, ist es wichtig, dass der Schaftbereich 14 eine entsprechend hohe Reibung aufweist.

In Fig. 2 ist das Verbindungselement 10 in einer weiteren schematischen Seitenansicht gezeigt. Wie in Fig. 2 schematisch angedeutet, weist der zugespitzte Bereich 12 eine Gleitbeschichtung 18 und der Schaftbereich 14 eine Haftbeschichtung 20 auf. Bei der Herstellung des Verbindungselements 10 wird zunächst das gesamte Verbindungselement 10 mit der Haftbeschichtung 20 versehen. Anschließend wird ausschließlich der zugespitzte Bereich 12, welcher folglich ebenfalls mit der Haftbeschichtung 20 versehen ist, in einem ersten Tauchbad von der Haftbeschichtung 20 befreit und danach ausschließlich der zugespitzte Bereich 12 in einem zweiten Tauchbad mit der Gleitbeschichtung 18 versehen. Aufgrund der Gleitbeschichtung 18 gleitet das Verbindungselement 10 mit seinem zugespitzten Bereich 12 besonders leicht in einen insbesondere eine geringe Steifigkeit aufweisenden Werkstoff ein. Aufgrund der Haftbeschichtung 20 wird eine hohe Reibung zwischen dem Schaftbereich 20 und den miteinander zu fügenden Blechen dennoch gewährleistet, sodass eine hohe Haltekraft beziehungsweise Festigkeit der mittels des Verbindungselements 10 hergestellten Fügeverbindung sichergestellt werden kann.

Zusätzlich kann es auch noch vorgesehen sein, dass der zugespitzte Bereich 12 eine geringere Oberflächenrauhigkeit als der Schaftbereich 14 aufweist. Dies kann beispielsweise durch eine entsprechende mechanische Bearbeitung des zugespitzten Bereichs 12 beziehungsweise des Schaftbereichs 14 erzielt werden. Dadurch ist es ebenfalls möglich, insbesondere Bleche mit einer relativ geringen Steifigkeit mittels des Verbindungselements 10 sicher zu fügen. Durch die im Gegensatz zum Schaftbereich 14 relativ geringe Oberflächenrauhigkeit des zugespitzten Bereichs 12 dringt der zugespitzte Bereich 12 sehr leicht in entsprechende Blechteile mit einer geringen Steifigkeit ein, wobei aufgrund der erhöhten Oberflächenrauhigkeit des Schaftbereichs 14 dieser an den miteinander gefügten Blechen entsprechend stark reibt und somit eine hohe Haltekraft bei der hergestellten Fügeverbindung erzielt werden kann.

Das Verbindungselement 10 weist also lokal gezielt unterschiedliche Eigenschaften bezüglich seiner Härte und/oder Beschichtung auf. Somit können Werkstoffe sowohl mit einer hohen Streckgrenze als auch Werkstoffe mit einer geringen Steifigkeit zuverlässig mittels des Verbindungselements 10 gefügt werden. Die jeweiligen Funktionsbereiche 12, 14 des Verbindungselements 10 weisen also je nach zu fügenden Blechen die optimalen Eigenschaften auf. Es muss kein Kompromiss eingegangen werden hinsichtlich der Werkstoffeigenschaften und der Beschichtungseigenschaften, stattdessen können jeweils die optimalen Eigenschaften gezielt während der Herstellung des Verbindungselements 10 erzielt werden.

Die vorliegende Erfindung ist nicht beschränkt auf Verbinden von zumindest zwei Bauteilen, insbesondere Blechbauteilen. Mittels des Verbindungselements 10 können auch Bauteile aus Guss oder anderen Werkstoffen miteinander verbunden werden.

## Patentansprüche

1. Verfahren zum Herstellen eines Verbindungselements (10), insbesondere eines Setzbolzens, zum Verbinden von zumindest zwei Bauteilen, insbesondere Blechbauteilen, bei welchem ein zugespitzter Bereich (12) und ein Schaftbereich (14) des Verbindungselements (10) mit unterschiedlichen Eigenschaften hergestellt werden und das Verbindungselement (10) einstückig hergestellt wird,
**dadurch gekennzeichnet, dass**
das gesamte Verbindungselement (10) mit einer Haftbeschichtung (20) versehen, anschließend ausschließlich der zugespitzte Bereich (12) in einem ersten Tauchbad von der Haftbeschichtung (20) befreit und danach der zugespitzte Bereich (12) in einem zweiten Tauchbad mit einer Gleitbeschichtung (18) versehen wird.

2. Verfahren nach Anspruch 1,
**dadurch gekennzeichnet, dass**
der zugespitzte Bereich (12) lasergehärtet oder induktiv gehärtet wird.

3. Verfahren nach Anspruch 2,
**dadurch gekennzeichnet, dass**
der zugespitzte Bereich (12) nach dem Laserhärten oder induktiven Härten angelassen wird.

## Claims

1. Method for producing a connecting element (10), in particular a cartridge-fired pin, for connecting at least two components, in particular sheet metal component, in which method a pointed region (12) and a shank region (14) of the connecting element (10) are produced with different properties and the connecting element (10) is produced in one piece,
**characterised in that**
the entire connecting element (10) is provided with an adhesive coating (20), whereupon only the pointed region (12) is freed of the adhesive coating (20) in a first immersion bath and the pointed region (12) is then provided with an antifriction coating (18) in a second immersion bath.

2. Method according to claim 1,
**characterised in that**
the pointed region (12) is laser-hardened or inductively hardened.

3. Method according to claim 2,
**characterised in that**
the pointed region (12) is tempered after laser-hardening or inductive hardening.

## Revendications

1. Procédé de fabrication d'un élément de liaison (10), en particulier d'un boulon de fixation, pour relier au moins deux éléments, en particulier, deux éléments en tôle, selon lequel une zone effilée (12) et une zone de tige (14) de l'élément de liaison (10) présentant différentes propriétés étant fabriquées et l'élément de liaison (10) étant fabriqué d'un seul tenant, **caractérisé en ce que** l'élément de liaison tout entier (10) est pourvu d'un revêtement adhésif (20), ensuite uniquement la zone effilée (12) est libérée dans une première immersion du revêtement adhésif (20) et ensuite la zone effilée (12) est pourvue d'un revêtement glissant (18) dans une seconde immersion.

2. Procédé selon la revendication 1, **caractérisé en ce que** la zone effilée (12) est durcie au laser ou par induction.

3. Procédé selon la revendication 2, **caractérisé en ce que** la zone effilée (12) a été recuite après le durcissement au laser ou par induction.
